# EUROPÄISCHE PATENTSCHRIFT

(11) **EP 2 247 867 B1**
(45) Veröffentlichungstag und Bekanntmachung des Hinweises auf die Patenterteilung: **08.02.2012**
(21) Anmeldenummer: 08873191.4
(22) Anmeldetag: 22.10.2008
(51) Int. Cl.: F16D 21/06, F16D 23/12

(54) **BETÄTIGUNGSANORDNUNG FÜR SCHALTELEMENTE EINES GETRIEBES**
ACTUATING ARRANGEMENT FOR SHIFT ELEMENTS OF A TRANSMISSION
DISPOSITIF D'ACTIONNEMENT POUR LES ÉLÉMENTS DE COMMANDE D'UN EMBRAYAGE

(30) Priorität: 06.03.2008 DE 102008012894
(43) Veröffentlichungstag der Anmeldung: 10.11.2010
(73) Patentinhaber: ZF Friedrichshafen AG, 88038 Friedrichshafen (DE)
(72) Erfinder: REISCH, Matthias, 88214 Ravensburg (DE); WAFZIG, Jürgen, 88097 Eriskirch (DE)
(86) Internationale Anmeldenummer: PCT/EP2008/064241
(87) Internationale Veröffentlichungsnummer: WO 2009/109241

(56) Entgegenhaltungen:
- DE-A1- 10 238 118
- DE-A1-102005 048 737

## Beschreibung

Die vorliegende Erfindung betrifft eine Betätigungsanordnung mit zumindest zwei koaxial zueinander angeordneten Schaltelementen eines Getriebes, insbesondere eines Doppelkupplungsgetriebes, gemäß der im Oberbegriff des Patentanspruches 1 näher definierten Art.

Beispielsweise aus der Druckschrift DE 102 38 118 A1 ist eine Betätigungseinrichtung für eine Reibungskupplungseinrichtung zum Einleiten von Betätigungskräften, insbesondere Einrück- oder Ausdrückkräften bekannt. Mit der Betätigungseinrichtung können die Reibungskupplungen im Einrück- oder Ausrücksinne betätigt werden. Die Betätigungseinrichtung umfasst ein der ersten Reibungskupplungsanordnung zugeordnetes erstes Betätigungsglied und ein der zweiten Reibungskupplungsanordnung zugeordnetes zweites Betätigungsglied, die relativ zu einem axial feststehenden Stützglied zum Ausüben der Betätigungskräfte axial verstellbar sind. Die Betätigungsglieder sind derart einem Aktuator zugeordnet, dass eine unter Vermittlung des jeweiligen Aktuators dem jeweiligen Betätigungsglied erteilte Drehbewegung relativ zu dem gegen Verdrehung abgestützten Stützglied in eine axiale Translationsbewegung des Betätigungsgliedes relativ zu dem axial abgestützten Stützglied umgesetzt wird.

Ferner ist aus der Druckschrift DE 103 13 382 A1 eine Ausrückeinheit für die Kupplungen eines Doppelkupplungsgetriebes eines Fahrzeuges bekannt. Die bekannte Ausrückeinheit umfasst zwei Ausrücksysteme zum Betätigen der Kupplungen, wobei ein inneres Ausrücksystem und ein äußeres Ausrücksystem vorgesehen sind, welche koaxial zueinander angeordnet sind. Die Ausrücksysteme umfassen Rampenanordnungen, die radial ineinander verschachtelt angeordnet sind und zueinander bewegbar sind, so dass eine Drehbewegung in eine axiale Ausdrückbewegung umgewandelt wird. Zur Betätigung der Ausrücksysteme sind Seilzüge, Zahnräder oder Riemengetriebe vorgesehen.

Darüber hinaus ist aus der Druckschrift DE 10 2005 048 737 A1 eine weitere Betätigungseinrichtung für eine im Antriebsstrang eines Kraftfahrzeuges angeordnete Doppel-Reibungskupplungseinrichtung zum Einleiten von Betätigungskräften bekannt, wobei jeder Reibungskupplungsanordnung ein Betätigungsglied zugeordnet ist. Die beiden Betätigungsglieder sind über ein Koppelglied in Bezug auf ihre axiale Verstellung relativ zum Stützglied bewegungsverkoppelt, so dass teilbereichsweise über die axialen Verstellbereiche der beiden Betätigungsglieder eine Verstellung des einen der Betätigungsglieder in einer der Axialrichtungen eine Verstellung des anderen der Betätigungsglieder in der anderen Axialrichtung bedingt.

Den bekannten Betätigungsanordnungen liegt der gemeinsame Nachteil zu Grunde, dass bei der Umwandlung der Drehbewegung in eine axiale Bewegung ein erheblicher Bauraumbedarf für die Stelleinrichtungen der Betätigungsanordnungen erforderlich ist und dadurch die Getriebebaulänge vergrö-βert wird.

Der vorliegenden Erfindung liegt die Aufgabe zu Grunde, eine Betätigungsanordnung für zumindest zwei koaxial zueinander angeordnete Schaltelemente eines Getriebes der eingangs beschriebenen Gattung vorzuschlagen, welche möglichst kompakt aufgebaut ist und somit einen möglichst geringen Bauraum benötigt.

Diese Aufgabe wird erfindungsgemäß durch die Merkmale des Patentanspruches 1 gelöst, wobei weitere vorteilhafte Ausgestaltungen den Unteransprüchen und den Zeichnungen zu entnehmen sind.

Es wird eine Betätigungsanordnung für zumindest zwei vorzugsweise koaxial zueinander angeordnete Schaltelemente eines Getriebes, insbesondere eines Doppelkupplungsgetriebes, mit zumindest zwei Stelleinrichtungen zum Betätigen der zugeordneten Schaltelemente vorgeschlagen, wobei die Stelleinrichtungen zumindest je einen Drehantrieb oder dergleichen und zumindest je ein Stellglied umfassen, wobei der Drehantrieb und das jeweilige Stellglied über korrespondierende Verzahnungen miteinander gekoppelt sind und wobei die Drehbewegung jedes Drehantriebes in einer axialen Stellbewegung des zugeordneten Stellgliedes umwandelbar ist und die Stellglieder koaxial zueinander angeordnet sind. Erfindungsgemäß kann die axiale Position der Zähne der Verzahnung jedes Stellgliedes in Umfangsrichtung zumindest bereichsweise variieren. Auf diese Weise kann z.B. ein progressiver, degressiver, alternierender oder dergleichen Verlauf der Zähne bei der Verzahnung realisiert werden.

Aufgrund der Umwandlung einer Drehbewegung des Drehantriebes in eine translatorische Bewegung des zugeordneten Stellgliedes wird jedem Drehwinkel ein Axialweg zugeordnet. Bei der erfindungsgemäßen Betätigungsanordnung kann an jedem Stellglied durch den vorgeschlagenen axialen Versatz der Zähne in Umfangsrichtung der Verzahnung die durch jede Drehbewegung verursachte axiale Bewegung des Stellgliedes derart ausgeglichen werden, dass die Verzahnungen des Drehantriebes und des Stellgliedes aufgrund des axialen Ausgleichs entlang des Stellbereiches der Stelleinrichtung im vollständigen Eingriff bleiben, da der Eingriffsbereich der Verzahnungen in einer axialen Ebene verbleibt. Auf diese Weise kann auf eine sonst erforderliche Verbreiterung der Verzahnungen in axialer Richtung verzichtet werden. Dadurch kann erheblich axialer Bauraum eingespart werden, da die koaxial zueinander angeordneten Stelleinrichtungen in axialer Richtung gegenseitig keinen beziehungsweise nur einen minimalen Bauraum für den jeweiligen Verstellbereich der anderen Stelleinrichtung vorhalten müssen.

Zudem kann durch die erfindungsgemäße Betätigungsanordnung eine sehr kompakte Bauform erreicht werden, da die beiden Stelleinrichtungen zur Betätigung der beiden Schaltelemente, beispielsweise der Kupplungen eines Doppelkupplungsgetriebes, ineinander verschachtelt angeordnet werden können. Dadurch, dass die vorgeschlagene Betätigungsanordnung einen deutlich geringeren axialen Bauraum benötigt, kann diese beispielsweise bei einem Doppelkupplungsgetriebe in Vorgelegewellebauweise axial auf Höhe der Konstantenritzel und der Vorgelegewellenlager angeordnet werden, so dass sich der dort bereits vorhandene Bauraum für die Betätigungsanordnung in vorteilhafter Weise nutzen lässt.

Im Rahmen einer vorteilhaften Ausführung der Erfindung kann vorgesehen sein, dass die Verzahnung jedes Stellgliedes als Zahnradsegment oder dergleichen mit einem im Wesentlichen schraubenlinienförmigen oder dergleichen Verlauf ausgebildet ist, wobei auch Konturen mit degressivem , progressivem oder dergleichen Steigungsverlauf verwendet werden können. Es sind auch andere konstruktive Ausgestaltungen der Verzahnung denkbar, welche den axialen Versatz der Zähne der Verzahnung in Umfangsrichtung realisieren und somit den Ausgleich der axialen Bewegung der Stellgliedes durch die Drehung des Drehantriebes ermöglichen.

Beispielsweise kann das Zahnradsegment fest mit dem jeweiligen Stellglied verbunden sein, so dass die z.B. über ein Ritzel des Drehantriebes erzeugte Drehbewegung über die Verzahnung des Zahnradsegments auf das Stellglied zur axialen Stellbewegung übertragen wird. Um eine besonders bauraumsparende Anordnung zu gewährleisten, kann vorgesehen sein, dass das Zahnradsegment an dem jeweiligen Stellglied radial nach außen verlaufend befestigt ist. Es sind auch andere konstruktive Ausführungen denkbar, welche eine axiale Bauraumeinsparung ermöglichen.

Gemäß einer Weiterbildung der Erfindung kann vorgesehen sein, dass die Breite des jeweiligen Zahnradsegments in Umfangsrichtung variiert. Die Breite des Zahnradsegments kann z.B. derart entlang des Umfanges variiert werden, dass Bereiche, an denen ein hohes Drehmoment übertragen wird breiter ausgestaltet werden, und Bereiche, an denen ein geringes Drehmoment übertragen wird, entsprechend schmaler ausgeführt werden. Auf diese Weise kann einerseits Material eingespart werden und andererseits kann der Freigang der Verzahnung optimiert werden.

Die Art der Ausführung der Verzahnung des jeweiligen Zahnradsegments kann an die jeweilige Einbausituation in dem Getriebe angepasst werden werden. Beispielsweise kann das Zahnradsegment als Stirnrad, Schneckenrad oder Winkeltrieb ausgebildet sein. Das Stirnrad kann zum Beispiel gerad- oder schrägverzahnt ausgeführt werden.

Um die Drehbewegung des jeweiligen Drehantriebes in eine axiale Stellbewegung des zugeordneten Stellgliedes umwandeln zu können, kann gemäß einer nächsten Ausgestaltung der Erfindung vorgesehen sein, dass die Stellglieder der Stelleinrichtung drehbar an einem gehäusefesten Bauteil gelagert sind. Es ist jedoch auch möglich, dass die Stellglieder der Stelleinrichtungen drehbar aneinander gelagert sind, wobei durch entsprechendes Blockieren des einen oder anderen Stellgliedes die entsprechende Umsetzung der Drehbewegung in eine axiale Stellbewegung ermöglicht wird. Unter dem Begriff drehbar wird eine zumindest bereichsweise Kopplung von einer Dreh- und Axialbewegung des Stellgliedes verstanden. Somit bedeutet drehbar gelagert, dass die Drehbewegung des Stellgliedes zwangsweise mit einer Axialbewegung gekoppelt ist.

Eine mögliche Ausführungsvariante der Erfindung zur Umwandlung der Drehbewegung in eine translatorische Bewegung kann vorsehen, dass das gehäusefeste Bauteil eine Wälzkörperspindel, Kugelspindel oder dergleichen ist, welche mit einer ersten radial außen liegenden Spindelmutter oder dergleichen als Stellglied der ersten Stelleinrichtung und mit einer zweiten radial innen liegenden Spindelmutter oder dergleichen als Stellglied der zweiten Stelleinrichtung in Wirkverbindung steht. Somit erfolgt die Abstützung des drehbaren Stellgliedes am Gehäuse über die Wälzkörperspindel, wobei sich ein linearer Zusammenhang zwischen Drehwinkel und Axialposition ergibt. Zudem kann die Wälzkörperspindel die Funktion der Radiallagerung übernehmen. Es sind auch separate Lagerstellen denkbar.

Eine andere mögliche Ausführungsvariante der Erfindung zur Umwandlung der Drehbewegung in eine translatorische Bewegung kann vorsehen, dass das gehäusefeste Bauteil ein Wälzkörperrampenelement, Kugelrampenelement oder dergleichen ist, welches mit einem ersten z.B. radial außen liegenden, drehbaren Wälzkörperrampenelement, Kugelrampenelement oder dergleichen als Stellglied der ersten Stelleinrichtung und mit einem z.B. radial innen liegenden, drehbaren Wälzkörperrampenelement, Kugelrampenelement oder dergleichen als Stellglied der zweiten Stelleinrichtung in Eingriff steht. Auf diese Weise erfolgt die Abstützung der drehbaren Bauteile am Gehäuse über das gehäusefeste Wälzkörperrampenelement. Auch bei dieser Ausführungsvariante ist der Zusammenhang zwischen dem Drehwinkel und der Axialposition des Stellgliedes durch Variation der Steigung frei wählbar. Zur Radiallagerung kann z.B. ein zusätzliches Bauteil verwendet werden.

Unabhängig von der jeweiligen Ausführung der Erfindung können die beiden Spindelmuttern bzw. die beiden drehbaren Wälzkörperrampenelemente innen oder beide außen oder beide nebeneinander angeordnet sein.

Eine besonders vorteilhafte Ausführung der Erfindung kann dadurch realisiert werden, dass die Steigung der gehäusefesten Wälzkörperspindel oder des gehäusefesten Wälzkörperrampenelements in etwa der Steigung des jeweiligen schraubenlinienförmigen Zahnradsegments entspricht. Denn dadurch wird sichergestellt, dass die durch die Drehbewegung erzeugte Axialbewegung des Stellgliedes durch den Verlauf der Verzahnung des Zahnradsegments ausgeglichen wird. Es sind jedoch auch unterschiedliche Steigungen verwendbar.

Um das gehäusefeste Bauteil, wie z.B. die Wälzkörperspindel oder das Wälzkörperrampenelement an dem Gehäuse des Getriebes zu befestigen, kann gemäß seiner nächsten Ausgestaltung vorgesehen sein, dass das Bauteil ein radial nach außen verlaufendes Gehäuseflanschelement oder dergleichen als Gehäuseabstützung aufweist. Dieses Gehäuseflanschelement kann zum Beispiel zumindest im Bereich zwischen den Zahnradsegmenten annähernd schraubenlinienförmig verlaufen. Auf diese Weise wird eine besonders bauraumsparende Anordnung realisiert. Es sind auch andere konstruktive Ausführungen denkbar.

Es ist auch möglich, dass die bewegbaren Bauteile der Stelleinrichtungen zum Beispiel mittels Gleitelementen oder dergleichen an dem gehäusefesten Bauteil abgestürzt beziehungsweise gelagert werden. Je nach Ausführung der zu betätigenden Schaltelemente können die drehbaren Bauteile beziehungsweise Stellglieder der Stelleinrichtungen drückend und/oder ziehend auf das zugeordnete Schaltelement wirken.

Als Drehantrieb kann zum Beispiel ein Elektromotor mit einem Antriebsritzel verwendet werden. Es sind aber auch andere Antriebsmöglichkeiten denkbar. Je nach Anwendungsbereich können die beiden Stellglieder der Stelleinrichtungen von je einem elektrischen Drehantrieb oder von einem gemeinsamen Drehantrieb angetrieben werden. Es sind auch nicht elektrische Antriebe einsetzbar.

Die Antriebsachse beziehungsweise Drehachse des jeweiligen Drehantriebes kann zum Beispiel achsparallel oder auch windschief zur Achse der Stelleinrichtungen angeordnet sein. Die windschiefe Ausführung ermöglicht eine reibungsoptimierte Anordnung des Aktuators beziehungsweise des Drehantriebes.

Eine nächste Weiterbildung der Erfindung kann vorsehen, dass die Stelleinrichtungen mit zumindest einer Getriebebremse gekoppelt sind. Wenn zum Beispiel der Drehantrieb aus seiner Nullstellung heraus in die eine Stellrichtung fährt, so wird die als Schaltelement ausgeführte Kupplung geschlossen. Wenn der Drehantrieb in die andere Richtung fährt, wird die Getriebebremse betätigt. In der Nullstellung kann die Getriebebremse und die Kupplung geöffnet werden.

Zur weiteren Optimierung der Betriebsweise der vorgeschlagenen Betätigungsanordnung kann im Rahmen einer weiteren Ausgestaltung der Erfindung vorgesehen sein, dass an den Stellgliedern zumindest ein Element zur Kraftkompensation angreift. Beispielsweise kann an den Zahnradsegmenten jeweils eine Kompensationsfeder oder dergleichen zur Kraftkompensation vorgesehen sein.

Die vorgeschlagene Betätigungsanordnung kann je nach Anwendungsfall für beliebige Schaltelemente, wie z.B. Kupplungen oder Bremsen verwendet werden. Bevorzugt kann eine Anwendung bei einer Doppelkupplung vorgesehen sein, welche zum Beispiel ölgekühlt oder auch trocken ausgeführt ist. Als Kupplungen können zum Beispiel reibschlüssige oder auch formschlüssige Kupplungen vorgesehen sein. Die Kupplungen können als Kupplungen des normalerweise geöffneten Typs oder des normalerweise geschlossenen Typs ausgebildet sein.

Nachfolgend wird die Erfindung anhand der Zeichnungen näher erläutert. Es zeigen:
Fig. 1 eine geschnittene Teilansicht eines Doppelkupplungsgetriebes mit einer ersten Ausführungsvariante einer erfindungsgemäßen Betätigungsanordnung;
Fig. 2 eine dreidimensionale, schematische Ansicht der ersten Ausführungsvariante der Betätigungsanordnung;
Fig. 3 eine geschnittene Ansicht der ersten Ausführungsvariante der Betätigungsanordnung gemäß Figur 2;
Fig. 4 eine Draufsicht auf die erste Ausführungsvariante der Betätigungsanordnung gemäß Figur 3;
Fig. 5 eine schematische Ansicht einer zweiten Ausführungsvariante der Betätigungsanordnung für zwei gedrückte Kupplungen als zu betätigende Schaltelemente;
Fig. 6 eine schematische Ansicht der zweiten Ausführungsvariante der Betätigungsanordnung für eine gedrückte und eine gezogene Kupplung als zu betätigende Schaltelemente; und
Fig. 7 eine schematische Ansicht der zweiten Ausführungsvariante der Betätigungsanordnung für zwei gezogene Kupplungen als zu betätigende Schaltelemente.

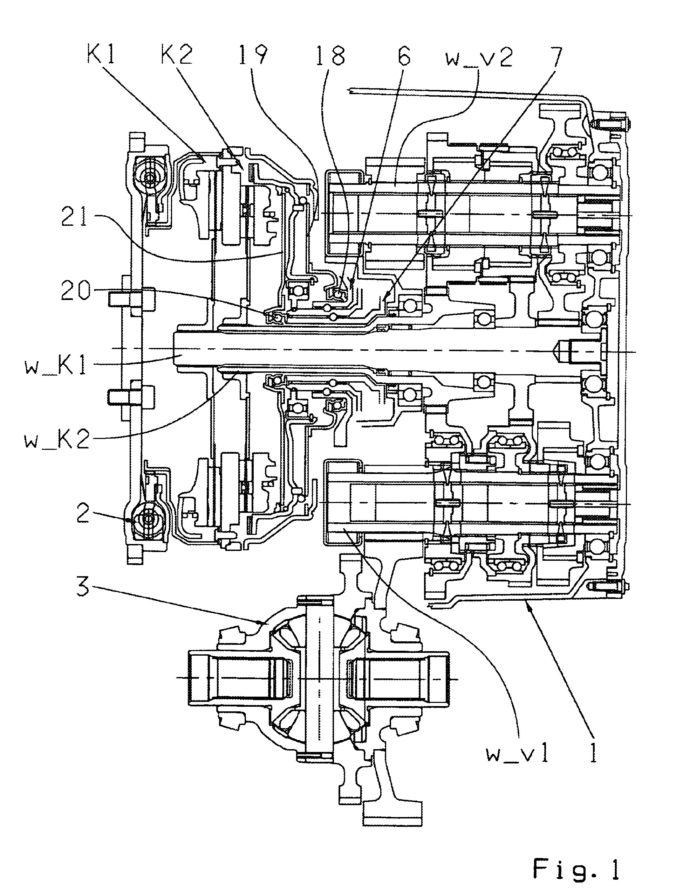

In Figur 1 ist beispielhaft eine geschnittene Ansicht eines Siebengang-Doppelkupplungsgetriebes mit einer ersten Ausführungsvariante einer erfindungsgemäßen Betätigungsanordnung gezeigt. Die Darstellung des Siebengang-Doppelkupplungsgetriebes ist nur exemplarisch für einen möglichen Anwendungsfall. Die erfindungsgemäß vorgeschlagene Betätigungsanordnung kann auch bei anderen Getriebesystemen oder dergleichen eingesetzt werden.

Das dargestellte Siebengang-Doppelkupplungsgetriebe 1 umfasst zwei Kupplungen K1, K2, deren Eingangsseiten mit einer Antriebswelle und deren Ausgangsseiten mit jeweils einer von zwei koaxial zueinander angeordneten Getriebeeingangswellen w_K1, w_K2 verbunden sind. Zudem ist an der Antriebswelle ein Torsionsschwingungsdämpfer 2 angeordnet. Ferner sind zwei Vorgelegewellen w_v1, w_v2 vorgesehen, auf denen als Losräder ausgebildete Gangzahnräder drehbar gelagert sind. An den beiden Getriebeeingangswellen w_K1, w_K2 sind drehfest angeordnete und als Festräder ausgebildete Gangzahnräder, die wenigstens zum Teil mit den Losrädern in Eingriff stehen. Um die Losräder mit der jeweiligen Vorgelegewelle w_v1, w_v2 verbinden zu können, ist eine nicht weiter ausgeführte Innenschaltung vorgesehen. Des Weiteren sind an den beiden Vorgelegewellen w_v1, w_v2 als Konstantenritzel Abtriebszahnräder angeordnet, welche mit einer Verzahnung eines Abtriebsdifferentials 3 gekoppelt sind.

Das in Figur 1 gezeigte Doppelkupplungsgetriebe 1 ist mit einer ersten Ausführungsvariante einer erfindungsgemäßen Betätigungsanordnung für die Doppelkupplung ausgerüstet. Die Betätigungsanordnung dient zur Betätigung der beiden koaxial zueinander angeordneten Kupplungen K1, K2. Dazu umfasst die Betätigungsanordnung unabhängig von den verschiedenen Ausführungsvarianten zwei koaxial zueinander angeordnete Stelleinrichtungen, wobei die Stelleinrichtungen zumindest einen Drehantrieb 4, 5 und zumindest ein Stellglied 6, 7 umfassen, die über korrespondierende Verzahnungen miteinander derart gekoppelt sind, so dass die Drehbewegung des Drehantriebes 4, 5 in eine axiale Stellbewegung des zugeordneten Stellgliedes 6, 7 umgewandelt wird. Erfindungsgemäß variiert die axiale Position der Zähne der Verzahnung jedes Stellgliedes 6, 7 in Umfangsrichtung zumindest bereichsweise.

Somit kann die aufgrund der Drehbewegung erzeugte axiale Stellbewegung des Stellgliedes 6, 7 derart ausgeglichen werden, dass die Verzahnung des zugeordneten Drehantriebes 4, 5 über den gesamten Stellbereich des Stellgliedes 6, 7 vollständig mit der Verzahnung des Stellgliedes 6, 7 in Eingriff bleibt. Unabhängig von der jeweiligen Ausführungsvariante ist die Verzahnung jedes Stellgliedes 6, 7 als Zahnradsegment 12, 13 mit einem im Wesentlichen schraubenlinienförmigen Verlauf ausgebildet. Das Zahnradsegment 12, 13 ist an dem jeweiligen Stellglied 6, 7 radial nach außen verlaufend angeordnet.

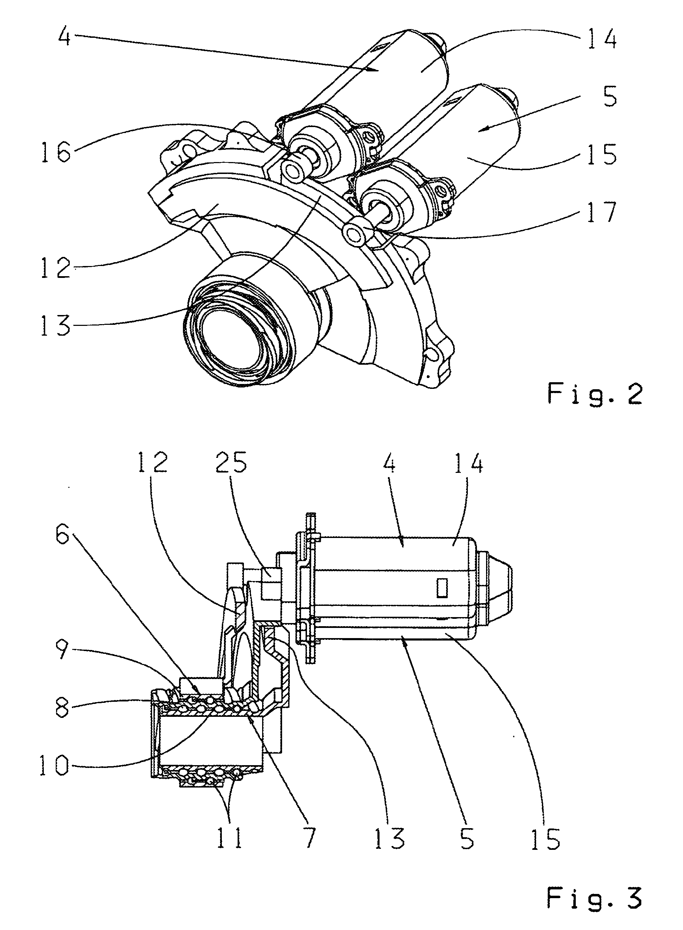

Die in Figur 1 dargestellte erste Ausführungsvariante der Betätigungsanordnung ist in den Figuren 2 bis 4 detailliert dargestellt. Bei der ersten Ausführungsvariante der Betätigungsanordnung umfassen die Stelleinrichtungen als gehäuseseitige Abstützung eine Wälzkörperspindel beziehungsweise Kugelspindel 8, an der eine erste radial außen liegende Spindelmutter 9 als Stellglied 6 der ersten Stelleinrichtung und eine zweite radiale innen liegende Spindelmutter 10 als Stellglied 7 der zweiten Stelleinrichtung gelagert sind. Auf diese Weise wird ein so genannter Doppel-Spindelausrücker mit der erfindungsgemäßen Betätigungsanordnung realisiert.

Sowohl die erste Spindelmutter 9 als auch die zweite Spindelmutter 10 werden über Wälzkörper 11 drehbar an der Wälzkörperspindel 8 gelagert beziehungsweise abgestützt. Die Wälzkörperspindel 8 ist über einen radial nach außen verlaufenden Abstützflansch 22 gehäuseseitig befestigt. Wie insbesondere aus Figur 3 ersichtlich ist, kann der radial verlaufene Abstützflansch 25 axial zwischen den beiden Zahnradsegmenten 12,13 bauraumsparend angeordnet werden.

Jeder Stelleinrichtung ist ein Drehantrieb 4, 5 zugeordnet, welcher als Elektromotor 14, 15 ausgebildet ist, der jeweils ein Ritzel 16, 17 antreibt. Die Verzahnungen der Ritzel 16, 17 stehen jeweils mit den Verzahnungen des zugeordneten Zahnradsegments 12, 13 der Stelleinrichtungen in Eingriff. Die Zahnradsegmente 12, 13 sind jeweils mit der ersten Spindelmutter 9 und mit der zweiten Spindelmutter 10 verbunden. Auf diese Weise werden die Spindelmuttern 9, 10 durch die Ritzel 16, 17 in Drehung versetzt und axial auf der Wälzkörperspindel 9 verstellt.

Wie insbesondere aus Figur 1 ersichtlich ist, stehen die erste Spindelmutter 9 über ein Einrücklager 18 mit einer Membranfeder 19 der ersten Kupplung K1 und die zweite Spindelmutter 10 über ein Einrücklager 20 mit einer Membranfeder 21 der zweiten Kupplung K2 zur Betätigung in Wirkverbindung. Durch die Umwandlung der Drehbewegung in eine axiale Stellbewegung der Spindelmuttern 9, 10 können die zugeordneten Kupplungen K1, K2 des Doppelkupplungsgetriebes 1 entsprechend betätigt werden.

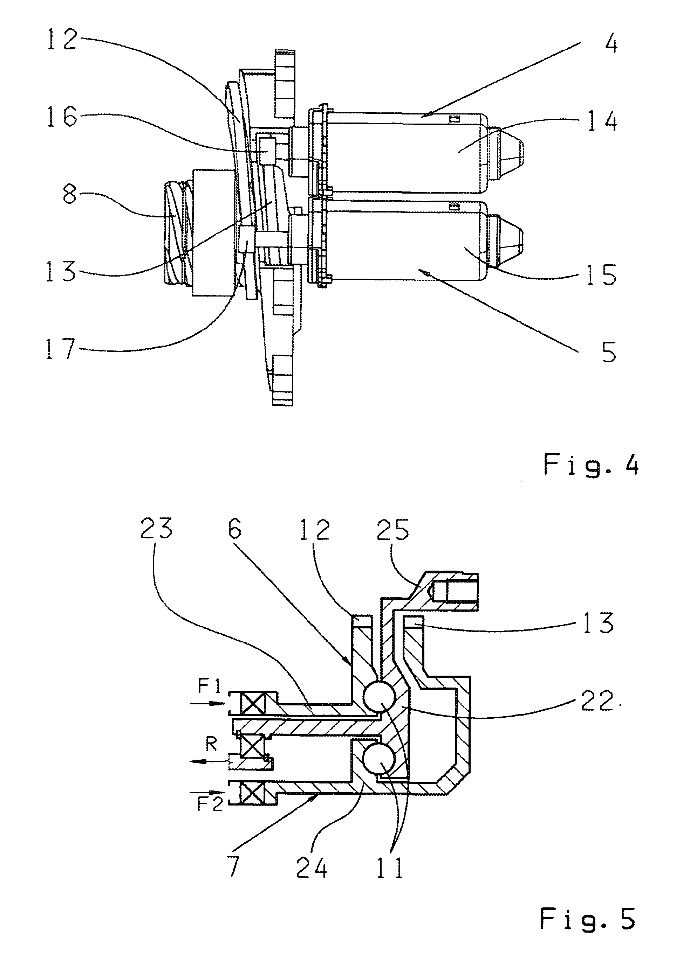

Insbesondere aus Figur 4 wird deutlich, dass die den Spindelmuttern 9, 10 zugeordneten Zahnradsegmente 12, 13 einen schraubenlinienförmigen Verlauf aufweisen, wobei die Breite der Verzahnung der Ritzel 16, 17 in etwa der Breite der Verzahnung der Zahnradsegmente 12, 13 entspricht. Dies ist möglich, da der Eingriffsbereich der Verzahnungen der Ritzel 16,17 und der Zahnradsegmente 12,13 aufgrund des schraubenlinienförmigen Verlaufes in etwa in einer axialen Ebene verbleibt. Dadurch benötigt die vorgeschlagene Betätigungsanordnung in axialer Richtung einen besonders geringen Bauraum.

Die Steigung der Wälzkörperspindel 8 entspricht in etwa der Steigung des schraubenlinienförmigen Verlaufes der jeweiligen Verzahnung der Zahnradsegmente 12, 13. Jedoch kann die Steigung der schraubenlinienförmigen Verzahnung der Zahnradsegmente 12,13 je nach Stellbereich und gewünschter Betätigungskraftcharakteristik entsprechend modifiziert werden.

Eine zweite mögliche Ausführungsvariante der erfindungsgemäßen Betätigungsanordnung ist in verschiedenen Varianten in den Figuren 5 bis 7 detailliert dargestellt. Bei der zweiten Ausführungsvariante ist das gehäusefeste Bauteil ein Wälzkörperrampenelement 22, welches mit einem ersten radial außen liegenden drehbaren Wälzkörperrampenelement 23 als Stellglied 6 der ersten Stelleinrichtung und mit einem zweiten radial innen liegenden drehbaren Wälzkörperrampenelement 24 als Stellglied 7 der zweiten Stelleinrichtung in Wirkverbindung steht. Auf diese Weise wird ein so genannter Wälzkörperbeziehungsweise Kugelrampenausrücker mit der erfindungsgemäßen Betätigungsanordnung realisiert. Somit werden sowohl das erste drehbare Wälzkörperrampenelement 23 als auch das zweite drehbare Wälzkörper Element 24 über Wälzkörper 11 drehbar an dem gehäusefesten Wälzkörperrampenelement 22 gelagert.

An dem ersten Wälzkörperrampenelement 23 und an dem zweiten Wälzkörperrampenelement 24 sind, wie auch schon bei der ersten Ausführungsvariante, die Zahnradsegmente 12, 13 angeordnet, welche mit den Ritzeln 16, 17 zum Antrieb in Eingriff stehen. Aufgrund des schraubenlinienförmigen Verlaufes der Verzahnungen der Zahnradsegmente 12, 13 ergeben sich auch bei der zweiten Ausführungsvariante die vorgenannten Vorteile.

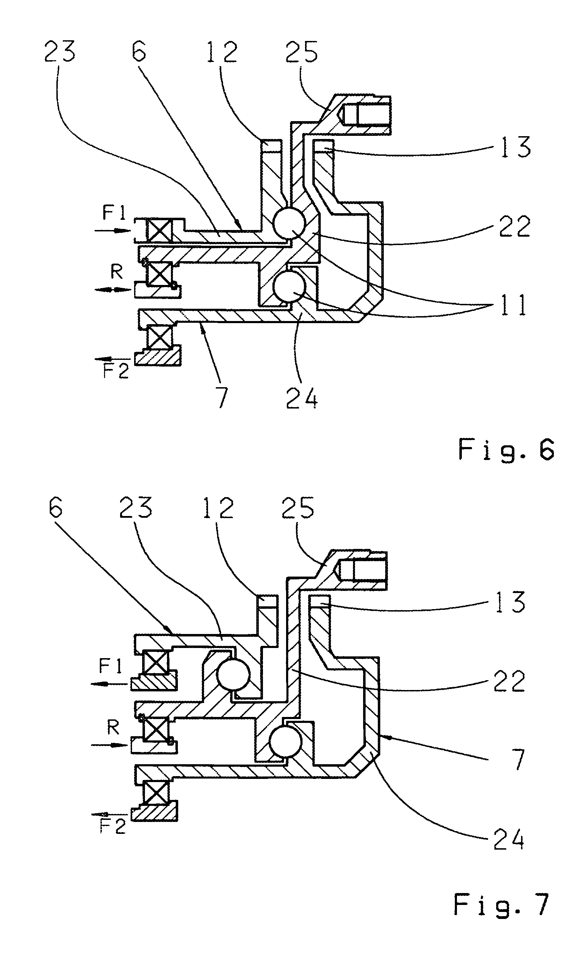

Die verschiedenen Darstellungen gemäß den Figuren 5 bis 7 der zweiten Ausführungsvariante der Erfindung unterscheiden sich konstruktiv dadurch, dass die Betätigungsanordnung für unterschiedliche Kupplungsarten eingesetzt werden können. Gemäß Figur 5 ist eine Variante des Kugelrampenausrückers für zwei gedrückte Kupplungen schematisch gezeigt. Figur 6 zeigt dagegen einen Kugelrampenausrücker für eine gedrückte und eine gezogene Kupplung. Schließlich zeigt Figur 7 eine Variante des Kugelrampenausrückers für zwei gezogene Kupplungen. Die verschiedenen Varianten unterscheiden sich dadurch, dass die Konstruktion des Wälzkörperrampenelement 22, des drehbaren Wälzkörperrampenelement 23 und des drehbaren Wälzkörperrampenelement 24 derart verändert bzw. variiert werden, dass die Richtung der Ausdrückkräfte, welche mit F1 und F2 bezeichnet sind, und der entsprechenden Reaktionskraft, welche mit R gekennzeichnet sind, an die jeweilige Betätigungsart der Kupplung angepasst sind.

### Bezugszeichen

- 1: Doppelkupplungsgetriebe
- 2: Torsionsschwingungsdämpfer
- 3: Abtriebsdifferential
- 4: Drehantrieb
- 5: Drehantrieb
- 6: Stellglied
- 7: Stellglied
- 8: Wälzkörperspindel
- 9: erste Spindelmutter
- 10: zweite Spindelmutter
- 11: Wälzkörper
- 12: Zahnradsegment
- 13: Zahnradsegment
- 14: Elektromotor
- 15: Elektromotor
- 16: Ritzel
- 17: Ritzel
- 18: Einrücklager
- 19: Membranfeder
- 20: Einrücklager
- 21: Membranfeder
- 22: gehäusefestes Wälzkörperrampenelement
- 23: erstes drehbares Wälzkörperrampenelement
- 24: zweites drehbares Wälzkörperrampenelement
- 25: Gehäuseflanschelement
- F1: Ausrückkraft der ersten Stelleinrichtung
- F2: Ausrückkraft der zweiten Stelleinrichtung
- R: Reaktionskraft
- K1: erste Kupplung
- K2: zweite Kupplung
- w_K1: erste Getriebeeingangswelle
- w_K2: zweite Getriebeeingangswelle
- w_v1: erste Vorgelegewelle
- w_v2: zweite Vorgelegewelle

## Patentansprüche

1. Betätigungsanordnung für zumindest zwei koaxial zueinander angeordnete Schaltelemente (K1, K2) eines Getriebes, insbesondere eines Doppelkupplungsgetriebes (1), mit zumindest zwei Stelleinrichtungen zum Betätigen der zugeordneten Schaltelemente, wobei die Stelleinrichtungen zumindest je einen Drehantrieb (4, 5) und zumindest je ein Stellglied (6, 7) umfassen, die über korrespondierende Verzahnungen miteinander gekoppelt sind, wobei die Drehbewegung jedes Drehantriebes (4, 5) in eine axiale Stellbewegung des zugeordneten Stellgliedes (6, 7) umwandelbar ist und die Stellglieder (6, 7) koaxial zueinander angeordnet sind, **dadurch gekennzeichnet, dass** die axiale Position der Zähne der Verzahnung jedes Stellgliedes (6, 7) in Umfangsrichtung zumindest bereichsweise variiert..

2. Betätigungsanordnung nach Anspruch 1, **dadurch gekennzeichnet, dass** die Verzahnung jedes Stellgliedes (6, 7) als Zahnradsegment (12, 13) ausgebildet ist.

3. Betätigungsanordnung nach Anspruch 2, **dadurch gekennzeichnet, dass** das Zahnradsegment (12, 13) einen im Wesentlichen schraubenlinienförmigen Verlauf aufweist.

4. Betätigungsanordnung nach Anspruch 2 oder 3, **dadurch gekennzeichnet, dass** das Zahnradsegment (12, 13) an dem jeweiligen Stellglied (6, 7) radial nach außen verlaufend angeordnet ist.

5. Betätigungsanordnung nach einem der Ansprüche 2 bis 4, **dadurch gekennzeichnet, dass** die axiale Breite des Zahnradsegments (12, 13) in Umfangsrichtung variiert.

6. Betätigungsanordnung nach einem der Ansprüche 2 bis 5, **dadurch gekennzeichnet, dass** das Zahnradsegment (12, 13) als Stirnrad, Schneckenrad oder Winkeltrieb ausgebildet ist.

7. Betätigungsanordnung nach einem der vorangehenden Ansprüche, **dadurch gekennzeichnet, dass** die Stellglieder (6, 7) der Stelleinrichtungen drehbar an einem gehäusefesten Bauteil gelagert sind.

8. Betätigungsanordnung nach einem der Ansprüche 1 bis 6, **dadurch gekennzeichnet, dass** die Stellglieder (6, 7) der Stelleinrichtungen drehbar aneinander gelagert sind.

9. Betätigungsanordnung nach Anspruch 7 oder 8, **dadurch gekennzeichnet, dass** das gehäusefeste Bauteil eine Wälzkörperspindel (8) ist, welche mit einer ersten vorzugsweise radial außen liegenden Spindelmutter (9) als Stellglied (6) der ersten Stelleinrichtung und mit einer zweiten vorzugsweise radial innen liegenden Spindelmutter (10) als Stellglied (7) der zweiten Stelleinrichtung in Wirkverbindung steht.

10. Betätigungsanordnung nach Anspruch 7 oder 8, **dadurch gekennzeichnet, dass** das gehäusefeste Bauteil ein Wälzkörperrampenelement (22) ist, welches mit einem ersten vorzugsweise radial außen liegenden drehbaren Wälzkörperrampenelement (23) als Stellglied (6) der ersten Stelleinrichtung und mit einem zweiten vorzugsweise radial innen liegenden drehbaren Wälzkörperrampenelement (24) als Stellglied (7) der zweiten Stelleinrichtung in Wirkverbindung steht.

11. Betätigungsanordnung nach Anspruch 9 oder 10, **dadurch gekennzeichnet, dass** die Steigung der gehäusefesten Wälzkörperspindel (8) oder des gehäusefesten Wälzkörperrampenelements (22) etwa der Steigung des zugeordneten schraubenlinienförmigen Zahnradsegments (12, 13) entspricht.

12. Betätigungsanordnung nach einem der vorangehenden Ansprüche, **dadurch gekennzeichnet, dass** das gehäusefeste Bauteil ein radial nach außen verlaufendes Gehäuseflanschelement (25) als Gehäuseabstützung aufweist.

13. Betätigungsanordnung nach einem der vorangehenden Ansprüche, **dadurch gekennzeichnet, dass** die Stellglieder (6, 7) der Stelleinrichtungen mittels Gleitelementen gelagert sind.

14. Betätigungsanordnung nach einem der vorangehenden Ansprüche, **dadurch gekennzeichnet, dass** die Stellglieder (6, 7) drückend und/oder ziehend auf das jeweils zugeordnete Schaltelement wirken.

15. Betätigungsanordnung nach einem der vorangehenden Ansprüche, **dadurch gekennzeichnet, dass** die Drehachse des Drehantriebes (4, 5) achsparallel oder windschief zur Achse der Stelleinrichtungen angeordnet ist.

16. Betätigungsanordnung nach einem der vorangehenden Ansprüche, **dadurch gekennzeichnet, dass** die Stelleinrichtungen mit zumindest einer Getriebebremse gekoppelt sind.

17. Betätigungsanordnung nach einem der vorangehenden Ansprüche, **dadurch gekennzeichnet, dass** an den Stellgliedern (6, 7) zumindest ein Element zur Kraftkompensation angreift.

18. Betätigungsanordnung nach einem der vorangehenden Ansprüche, **dadurch gekennzeichnet, dass** als Schaltelemente eine ölgekühlte oder trockene Doppelkupplung vorgesehen ist.

19. Betätigungsanordnung nach einem der vorangehenden Ansprüche, **dadurch gekennzeichnet, dass** als Schaltelemente ölgekühlte oder trockene Bremsen vorgesehen sind.

## Claims

1. Operating arrangement for at least two shift elements (K1, K2), which are arranged coaxially with respect to one another, of a gearbox, in particular of a dual clutch gearbox (1), having at least two actuating devices for operating the associated shift elements, wherein the actuating devices comprise in each case at least one rotary drive (4, 5) and at least in each case one actuating member (6, 7) which are coupled to one another by means of corresponding toothings, wherein the rotational movement of each rotary drive (4, 5) can be converted into an axial actuating movement of the associated actuating member (6, 7), and the actuating members (6, 7) are arranged coaxially with respect to one another, **characterized in that** the axial position of the teeth of the toothing of each actuating member (6, 7) varies at least in regions in the circumferential direction.

2. Operating arrangement according to Claim 1, **characterized in that** the toothing of each actuating member (6, 7) is designed as a toothed wheel segment (12, 13).

3. Operating arrangement according to Claim 2, **characterized in that** the toothed wheel segment (12, 13) has a profile substantially in the form of a helical line.

4. Operating arrangement according to Claim 2 or 3, **characterized in that** the toothed wheel segment (12, 13) on the respective actuating member (6, 7) is arranged so as to run radially outwards.

5. Operating arrangement according to one of Claims 2 to 4, **characterized in that** the axial width of the toothed wheel segment (12, 13) varies in the circumferential direction.

6. Operating arrangement according to one of Claims 2 to 5, **characterized in that** the toothed wheel segment (12, 13) is designed as a spur gear, worm gear or angle drive.

7. Operating arrangement according to one of the preceding claims, **characterized in that** the actuating members (6, 7) of the actuating devices are rotatably mounted on a component fixed with respect to a housing.

8. Operating arrangement according to one of Claims 1 to 6, **characterized in that** the actuating members (6, 7) of the actuating devices are rotatably mounted on one another.

9. Operating arrangement according to Claim 7 or 8, **characterized in that** the component fixed with respect to a housing is a rolling body spindle (8) which is operatively connected to a first spindle nut (9), situated preferably radially at the outside, as an actuating member (6) of the first actuating device, and to a second spindle nut (10), situated preferably radially at the inside, as an actuating member (7) of the second actuating device.

10. Operating arrangement according to Claim 7 or 8, **characterized in that** the component fixed with respect to a housing is a rolling body ramp element (22) which is operatively connected to a first rotatable rolling body ramp element (23), situated preferably radially at the outside, as an actuating member (6) of the first actuating device, and to a second rotatable rolling body ramp element (24), situated preferably radially at the inside, as an actuating member (7) of the second actuating device.

11. Operating arrangement according to Claim 9 or 10, **characterized in that** the pitch of the rolling body spindle (8) fixed with respect to a housing or of the rolling body ramp element (22) fixed with respect to a housing approximately corresponds to the pitch of the associated toothed wheel segment (12, 13) in the form of a helical line.

12. Operating arrangement according to one of the preceding claims, **characterized in that** the component fixed with respect to a housing has a radially outwardly running housing flange element (25) as a housing support.

13. Operating arrangement according to one of the preceding claims, **characterized in that** the actuating members (6, 7) of the actuating devices are mounted by means of sliding elements.

14. Operating arrangement according to one of the preceding claims, **characterized in that** the actuating members (6, 7) exert a pulling and/or pushing action on the respectively associated shift element.

15. Operating arrangement according to one of the preceding claims, **characterized in that** the axis of rotation of the rotary drive (4, 5) is arranged axially parallel to or skewed with respect to the axis of the actuating devices.

16. Operating arrangement according to one of the preceding claims, **characterized in that** the actuating devices are coupled to at least one gearbox brake.

17. Operating arrangement according to one of the preceding claims, **characterized in that** the actuating members (6, 7) are acted on by at least one element for force compensation.

18. Operating arrangement according to one of the preceding claims, **characterized in that** an oil-cooled or dry dual clutch is provided as shift elements.

19. Operating arrangement according to one of the preceding claims, **characterized in that** oil-cooled or dry brakes are provided as shift elements.

## Revendications

1. Agencement d'actionnement pour au moins deux éléments de commutation (K1, K2) disposés coaxialement l'un par rapport à l'autre, d'une transmission, en particulier d'une transmission à double embrayage (1), comprenant au moins deux dispositifs de commande pour actionner les éléments de commutation associés, les dispositifs de commande comprenant au moins chacun un entraînement en rotation (4, 5) et au moins chacun un actionneur (6, 7), qui sont accouplés l'un à l'autre par le biais de dentures correspondantes, le mouvement de rotation de chaque entraînement en rotation (4, 5) pouvant être converti en un mouvement de commande axial de l'actionneur associé (6, 7) et les actionneurs (6, 7) étant disposés de manière coaxiale l'un par rapport à l'autre, **caractérisé en ce que** la position axiale des dents de la denture de chaque actionneur (6, 7) varie au moins par zones dans la direction périphérique.

2. Agencement d'actionnement selon la revendication 1, **caractérisé en ce que** la denture de chaque actionneur (6, 7) est réalisée sous forme de segment de roue dentée (12, 13).

3. Agencement d'actionnement selon la revendication 2, **caractérisé en ce que** le segment de roue dentée (12, 13) présente une allure essentiellement hélicoïdale.

4. Agencement d'actionnement selon la revendication 2 ou 3, **caractérisé en ce que** le segment de roue dentée (12, 13) est disposé sur l'actionneur respectif (6, 7) de manière à s'étendre radialement vers l'extérieur.

5. Agencement d'actionnement selon l'une quelconque des revendications 2 à 4, **caractérisé en ce que** la largeur axiale du segment de roue dentée (12, 13) varie dans la direction périphérique.

6. Agencement d'actionnement selon l'une quelconque des revendications 2 à 5, **caractérisé en ce que** le segment de roue dentée (12, 13) est réalisé sous forme de pignon droit, de roue à denture hélicoïdale, ou de transmission angulaire.

7. Agencement d'actionnement selon l'une quelconque des revendications précédentes, **caractérisé en ce que** les actionneurs (6, 7) des dispositifs de commande sont montés de manière rotative sur un composant fixé au boîtier.

8. Agencement d'actionnement selon l'une quelconque des revendications 1 à 6, **caractérisé en ce que** les actionneurs (6, 7) des dispositifs de commande sont montés de manière à pouvoir tourner l'un par rapport à l'autre.

9. Agencement d'actionnement selon la revendication 7 ou 8, **caractérisé en ce que** le composant fixé au boîtier est une vis à corps de roulement (8), qui est en liaison fonctionnelle avec un premier écrou de vis (9) disposé de préférence radialement à l'extérieur en tant qu'actionneur (6) du premier dispositif de commande, et avec un deuxième écrou de vis (10) disposé de préférence radialement à l'intérieur en tant qu'actionneur (7) du deuxième dispositif de commande.

10. Agencement d'actionnement selon la revendication 7 ou 8, **caractérisé en ce que** le composant fixé au boîtier est un élément de rampe pour corps de roulement (22), qui est en liaison fonctionnelle avec un premier élément de rampe pour corps de roulement (23) rotatif, de préférence disposé radialement à l'extérieur, en tant qu'actionneur (6) du premier dispositif de commande, et avec un deuxième élément de rampe pour corps de roulement (24) rotatif, de préférence disposé radialement à l'intérieur, en tant qu'actionneur (7) du deuxième dispositif de commande.

11. Agencement d'actionnement selon la revendication 9 ou 10, **caractérisé en ce que** le pas de la vis à corps de roulement (8) fixée au boîtier ou de l'élément de rampe pour corps de roulement (22) fixé au boîtier correspond approximativement au pas du segment de roue dentée de forme hélicoïdale (12, 13).

12. Agencement d'actionnement selon l'une quelconque des revendications précédentes, **caractérisé en ce que** le composant fixé au boîtier présente un élément de bride de boîtier (25) s'étendant radialement vers l'extérieur, en tant que support de boîtier.

13. Agencement d'actionnement selon l'une quelconque des revendications précédentes, **caractérisé en ce que** les actionneurs (6, 7) des dispositifs de commande sont supportés au moyen d'éléments coulissants.

14. Agencement d'actionnement selon l'une quelconque des revendications précédentes, **caractérisé en ce que** les actionneurs (6, 7) agissent par pression et/ou traction sur l'élément de commutation associé respectif.

15. Agencement d'actionnement selon l'une quelconque des revendications précédentes, **caractérisé en ce que** l'axe de rotation de l'entraînement en rotation (4, 5) est disposé de manière parallèle ou en biais par rapport à l'axe des dispositifs de commande.

16. Agencement d'actionnement selon l'une quelconque des revendications précédentes, **caractérisé en ce que** les dispositifs de commande sont accouplés à au moins un frein de transmission.

17. Agencement d'actionnement selon l'une quelconque des revendications précédentes, **caractérisé en ce qu'**au moins un élément de compensation de force vient en prise sur les actionneurs (6, 7).

18. Agencement d'actionnement selon l'une quelconque des revendications précédentes, **caractérisé en ce qu'**un double embrayage à refroidissement à huile ou sec est prévu en tant qu'élément de commutation.

19. Agencement d'actionnement selon l'une quelconque des revendications précédentes, **caractérisé en ce que** des freins secs ou à refroidissement à huile sont prévus en tant qu'éléments de commutation.
